# EUROPEAN PATENT APPLICATION

(11) **EP 2 317 469 A1**
(43) Date of publication of application: **04.05.2011**
(21) Application number: 08809246.5
(22) Date of filing: 22.08.2008
(51) Int. Cl.: G06Q 50/00

(54) **ROUTE SEARCH DEVICE AND ROUTE SEARCH METHOD**

(71) Applicant: Navitime Japan Co., Ltd., Tokyo 101-0041 (JP)
(72) Inventor: SAKAMOTO, Hiroshi, Tokyo 101-0041 (JP)
(74) Representative: HOFFMANN EITLE
(86) International application number: PCT/JP2008/065037
(87) International publication number: WO 2010/021060

(57) **Abstract**

According to the present invention, a route search condition input from a user via an input unit is received from information processing terminal, at least one route satisfying the received route search condition is created by using route search information stored in a storage unit. For created at least one route, it is determined whether the route has been carbon offset in other systems for each of transportation facilities or each of operating distances of the transportation facilities, based on attribute data stored in the storage unit. When it is determined that the route has been carbon offset in other systems, the carbon-offset route is excluded from the created at least one route, and emissions emitted at the time of using the created at least one route are calculated for each corresponding the route, by using a calculation standard stored in the storage unit.

## Description

### TECHNICAL FIELD

The present invention relates to a route searching apparatus and a route searching method.

### BACKGROUND ART

Recently, a scheme referred to as carbon offset has been started as a measure for offsetting emissions of greenhouse gases such as carbon dioxide with respect to global warming issue due to greenhouse gases. The basic of the carbon offset is to purchase emission credits with respect to carbon dioxide emissions, and invest a fund corresponding to the emission credits to natural energy development and forestation or the like, to offset the carbon dioxide emissions.

An example of a trading system of emission credits for greenhouse gases is described below.

For example, Patent Document 1 describes a system in which countries trade emission credits themselves. Specifically, the system described in Patent Document 1 is not for individual users but intends emission trading among countries with an enormous volume of trading, and an amount of emission credits is not calculated in conjunction with route search of transportation facilities, but only the emission credits themselves are traded.

Further, Patent Document 2 describes a system in which carbon dioxide emission credits are provided to motorway users to promote usage of ETC. Specifically, in the system described in Patent Document 2, it is assumed that a difference in emissions between general roads and motorways corresponds to emission credits. This system is not for offsetting carbon dioxide emitted in the motorways, but a promoting effect of usage of the ETC is targeted to reduce carbon dioxide emissions unnecessarily generated by vehicles due to congestion at motorway tollgates.

Carbon dioxide is emitted when some transportation means are used, and therefore, in a navigation system that performs route search, when it is performed, it is desired to calculate carbon dioxide emissions generated at the time of using a searched route.

To realize transportation-related carbon offset in an individual level, it is better to calculate greenhouse gas emissions generated at the time of using a certain route and make settlement for emission credits for offsetting the greenhouse gas emissions in a navigation system including an information processing terminal used by an individual and a route searching apparatus, rather than to make settlement for emission credits by individuals at respective transportation facilities. In this manner, various transportation means can be handled and a charging system can be used. Paying attention to these points, there may be considered a navigation system in which users who use transportation facilities and desire to offset their carbon footprint on an individual level can participate in a carbon offset scheme without performing complicated processing.

Patent Document 1: Japanese Patent Application Laid-open No. 2002-149978
Patent Document 2: Japanese Patent Application Laid-open No. 2006-209228

### DISCLOSURE OF INVENTION

### PROBLEM TO BE SOLVED BY THE INVENTION

However, regarding carbon offset, various approaches have been currently made from many angles, and as in the above navigation system, when carbon dioxide emission credits corresponding to the route search result is purchased, there is a problem that measures and policies related to carbon offset may coexist.

For example, as an example of a carbon offset method, there may be considered a method of offsetting the carbon footprint in which carbon dioxide emission credits are included in the fare or the like of transportation facilities. According to this method, the carbon footprint can be offset for each of railway companies or each of train lines. Further, to prevent global warming, introduction of a carbon tax has been examined currently, and there can be also considered a method of imposing a tax corresponding to the carbon dioxide emission credits. According to this method, taxation for each of operating kilometers of railways or each of aerial routes can be also considered. Furthermore, it is also possible to consider imposing of a carbon tax on vehicle fuels and fuels for power generation plants, to offset their carbon footprint at a fuel stage.

In this manner, it may be foreseen that users who wish to offset their carbon footprint implement the carbon offset scheme, for example, according to the method of including emission credits in fares or the method of imposing a carbon tax, as described above. Therefore, if the carbon offset scheme is implemented without exception by the method of purchasing carbon dioxide emission credits corresponding to the route search result, there is a double taxation problem for users who wish to offset their carbon footprint. Accordingly, there is a problem that this method may not be approved by users who wish to offset their carbon footprint. Further, because emission reduction efforts of carbon dioxide have been continued at the moment in each of transportation facilities, it is required to increase the accuracy of a calculation standard to be used at the time of calculating greenhouse gas emissions generated when a certain route is used, and decrease a divergence between actual emissions and calculated emissions with respect to carbon dioxide emission data of respective transportation facilities.

The present invention has been achieved to solve the above described problems, and an object of the present invention is to provide a route searching apparatus and a route searching method that can support future measures and policies and technical renovations related to carbon offset, and can be approved by users who wish to offset their carbon footprint, by preventing double taxation of emission credits and calculating greenhouse gas emissions generated at the time of using a certain route highly accurately.

### MEANS FOR SOLVING PROBLEM

In order to attain this object, a route searching apparatus and a route searching method according to one aspect of the present invention are a route searching apparatus including a control unit and a storage unit and connected communicably via a network to an information processing terminal including an input unit and a display unit, and a route searching method executed by the route searching apparatus. The information processing terminal is held by a user who wishes to offset own carbon footprint. The storage unit includes a route-search-information storage unit that stores route search information including timetable data, road network data, and usage fee data of transportation facilities, an emission calculation-standard storage unit that stores a calculation standard of emissions of greenhouse gases per certain distance for each of the transportation facilities or each of operating distances of the transportation facilities, an emission-credit amount storage unit that stores an amount of emission credits of the greenhouse gases for each of the users, and an attribute data storage unit that stores attribute data, for each of the transportation facilities or each of the operating distances of the transportation facilities, indicating whether own carbon footprint has been offset in other systems. The control unit includes a route creating unit (a route creating step) that receives route search condition input by the user via the input unit from the information processing terminal, and creates at least one route satisfying the received route search condition by using the route search information stored in the route-search-information storage unit, a carbon-offset determining unit (a carbon-offset determining step) that determines whether own carbon footprint has been offset in the other systems for at least one route created by the route creating unit (the route creating step) based on the attribute data stored in the attribute data storage unit, for each of the transportation facilities or each of the operating distances of the transportation facilities, and an emission calculating unit (an emission calculating step) that excludes the carbon-offset route from at least one route created by the route creating unit (the route creating step), when the carbon-offset determining unit (the carbon-offset determining step) determines that own carbon footprint has been offset, and calculates the emissions emitted at a time of using the at least one route created by the route creating unit for each corresponding route by using the calculation standard stored in the emission calculation standard storage unit.

The route searching apparatus and the route searching method according to another aspect of the present invention is characterized in that the attribute data is determined according to presence of taxation on any one of used fuel and greenhouse gases or both.

The route searching apparatus and the route searching method according to still another aspect of the present invention is characterized in that the emission calculating unit (the emission calculating step) calculates the emissions emitted at a time of using the at least one route created by the route creating unit (the route creating step) for each corresponding route by using the calculation standard stored in the emission calculation-standard storage unit, when the carbon-offset determining unit (the carbon-offset determining step) determines that own carbon footprint has not been offset. The control unit further includes an emission-credit purchase-amount calculating unit (an emission-credit purchase-amount calculating step) that calculates a purchase amount of emission credits required for offsetting the emissions calculated by the emission calculating unit (the emission calculating step), a route-search-result displaying unit (a route-search-result displaying step) that transmits a route search result including at least one route created by the route creating unit (the route creating step), the emissions calculated by the emission calculating unit (the emission calculating step), and the purchase amount of emission credits calculated by the emission-credit purchase-amount calculating unit (the emission-credit purchase-amount calculating step) to the information processing terminal so that the route search result is displayed on the display unit, an emission offsetting unit (an emission offsetting step) that receives an emission-credit purchase request with respect to the purchase amount of emission credits corresponding to the route selected by the user via the input unit from the information processing terminal, based on the route search result displayed by the route-search-result displaying unit (the route-search-result displaying step), and offsets the emissions by subtracting the emissions corresponding to the received purchase amount of emission credits from the amount of emission credits stored in the emission-credit amount storage unit, and an offset-result displaying unit (an offset-result displaying step) that transmits an offset result including the emissions offset by the emission offsetting unit (the emission offsetting step) and the purchase amount of emission credits corresponding to the emissions to the information processing terminal so that the offset result is displayed on the display unit.

The route searching apparatus and the route searching method according to still another aspect of the present invention is characterized in that the control unit further includes a charging unit (a charging step) that charges the purchase amount of emission credits calculated by the emission-credit purchase-amount calculating unit (the emission-credit purchase-amount calculating step) to the user.

The route searching apparatus and the route searching method according to still another aspect of the present invention is characterized in that the storage unit further includes a history information storage unit that stores history information in which at least a part of the route search result and a part of the offset result are associated with each other for each of the users. The route-search-result displaying unit (the route-search-result displaying step) stores at least a part of the route search result in the history information storage unit for each of the users. The offset-result displaying unit (the offset-result displaying step) stores at least a part of the offset result in the history information storage unit for each of the users.

### EFFECT OF THE INVENTION

According to the present invention, future measures and policies and technical renovations related to carbon offset can be supported, double taxation of emission credits can be prevented, and greenhouse gas emissions generated at the time of using a certain route can be calculated highly accurately. Therefore, a route searching apparatus and a route searching method that can be approved by users who wish to offset their carbon footprint can be provided. Specifically, even if the users who wish to offset their carbon footprint have implemented the carbon offset scheme by a method other than purchasing carbon dioxide emission credits corresponding to the route search result, according to the present invention, the greenhouse gas emissions can be calculated by excluding a route that has been carbon offset. Therefore, double taxation of emission credits, which may occur when users implement the carbon offset scheme by purchasing the carbon dioxide emission credits corresponding to the route search result, can be prevented. Further, according to the present invention, a calculation standard of greenhouse gas emissions per certain distance is stored for each of the transportation facilities or each of operating distances of the transportation facilities, and the latest information, which is changing due to emission reduction efforts of carbon dioxide of each of the transportation facilities, is used. Accordingly, a divergence between actual emissions and calculated emissions of respective transportation facilities can be decreased.

According to the present invention, attribute data indicating whether the carbon footprint has been offset in other system is determined according to the presence of taxation on used fuels or greenhouse gases. Therefore, for example, it can be determined whether the carbon offset scheme has been implemented by such as a method of implementing the carbon offset scheme including the carbon dioxide emission credits in the fares or the like of the transportation facilities, a method of imposing taxation corresponding to the carbon dioxide emission credits as a carbon tax, or a method of implementing the carbon offset scheme at the fuel stage by imposing a carbon tax on vehicle fuels and fuels for power generation plants, as an implementation method of the carbon offset scheme other than the method of purchasing the carbon dioxide emission credits corresponding to the route search result.

According to the present invention, users who use transportation facilities and wish to offset their carbon footprint on an individual level can participate in the carbon offset scheme without performing complicated processing. Specifically, according to the present invention, when users perform route search by using a navigation system, the users can ascertain an amount of emission credits for greenhouse gases as well as the route, thereby enabling to select a route, taking carbon offset into consideration. Further, according to the present invention, carbon dioxide emissions based on the route determined with respect to the route search request from users who wish to offset their carbon footprint can be offset by the emission credits of the users. Consequently, according to the present invention, individual users can easily implement the carbon offset scheme with respect to carbon dioxide emitted by travels performed according to the routes provided by the route searching apparatus, without directly participating in a large-scale emission trading in the emission credit market.

According to the present invention, a purchase amount of emission credits can be charged to users by using a charging system provided by an existing membership navigation system, a mobile carrier or the like. Therefore, users can easily purchase emission credits and can select whether to purchase the emission credits beforehand or to purchase the emission credits ex post facto and the like, according to need. Consequently, according to the present invention, purchasing of the emission credits can be selected according to the financial capability or business plans of the users.

According to the present invention, history information in which at least a part of a route search result and a part of an offset result are associated with each other can be stored for each of the users. Therefore, carbon dioxide emissions, the amount of emission credits, and the purchase amount of emission credits can be easily calculated based on the history information of users who wish to offset their carbon footprint. According to the present invention, therefore, emissions to be carbon offset by users, the amount of emission credits required for offsetting the carbon dioxide emissions, and the purchase amount thereof and the like can be easily ascertained, thereby facilitating management of the emission credits.

### BRIEF DESCRIPTION OF DRAWINGS

FIG. 1 is a block diagram of an example of a logical configuration of a route searching apparatus 100 according to the present invention.
FIG. 2 is a diagram of an example of an attribute data structure according to the present invention.
FIG. 3 is a diagram of another example of the attribute data structure according to the present invention.
FIG. 4 is a diagram of an example of basic processing of the route searching apparatus 100 according to the present invention.
FIG. 5 is a diagram of an example of a display screen of an information processing terminal 10 that displays a route search result and an offset result.
FIG. 6 is a flowchart of an example of a carbon-offset determining process.
FIG. 7 is a flowchart of an example of an emission calculating process.
FIG. 8 is a flowchart of an example of a carbon-offset determining process.
FIG. 9 is a flowchart of an example of an emission-credit-amount subtracting process.
FIG. 10 is a flowchart of an example of a charging process.
FIG. 11 is a diagram of an example of the route searching apparatus 100 according to another embodiment of the present invention configured by a plurality of server devices.

### EXPLANATIONS OF LETTERS OR NUMERALS

100 route searching apparatus
102 control unit
   102a route creating unit
   102b carbon-offset determining unit
   102c emission calculating unit
   102d emission-credit purchase-amount calculating unit
   102e route-search-result displaying unit
   102f emission offsetting unit
   102g offset-result displaying unit
   102h charging unit
104 communication control interface unit
106 storage unit
   106a route-search-information file
   106b emission calculation-standard file
   106c emission-credit amount file
   106d attribute data file
   106e charge information file
   106f history information file
10-1 to 10-3 information processing terminal
300 network

### BEST MODE(S) FOR CARRYING OUT THE INVENTION

The following describes an embodiment of a route searching apparatus, a route searching method, and a program according to the present invention in detail with reference to the drawings. The present invention is not limited to the embodiments.

### Outline of present invention

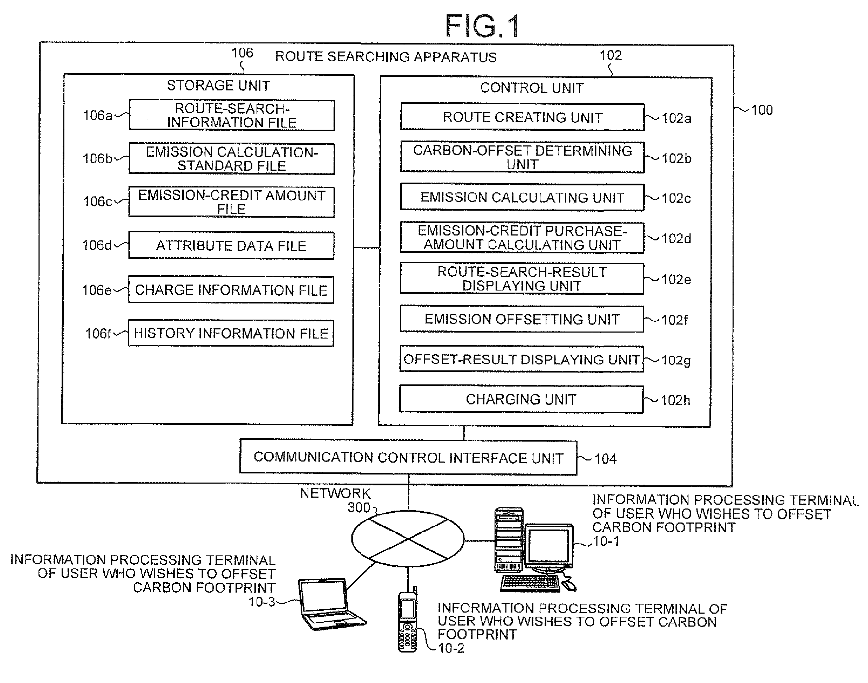

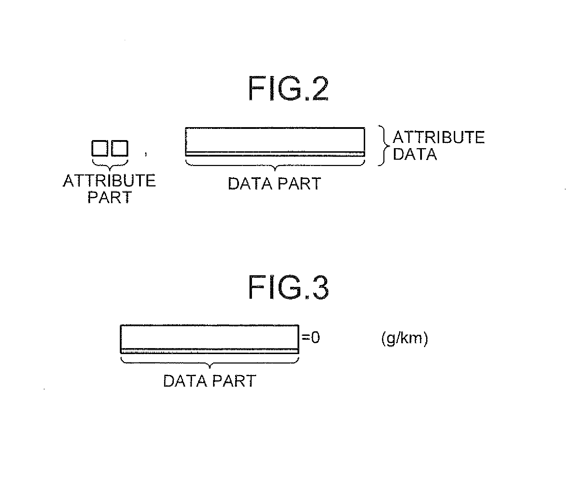

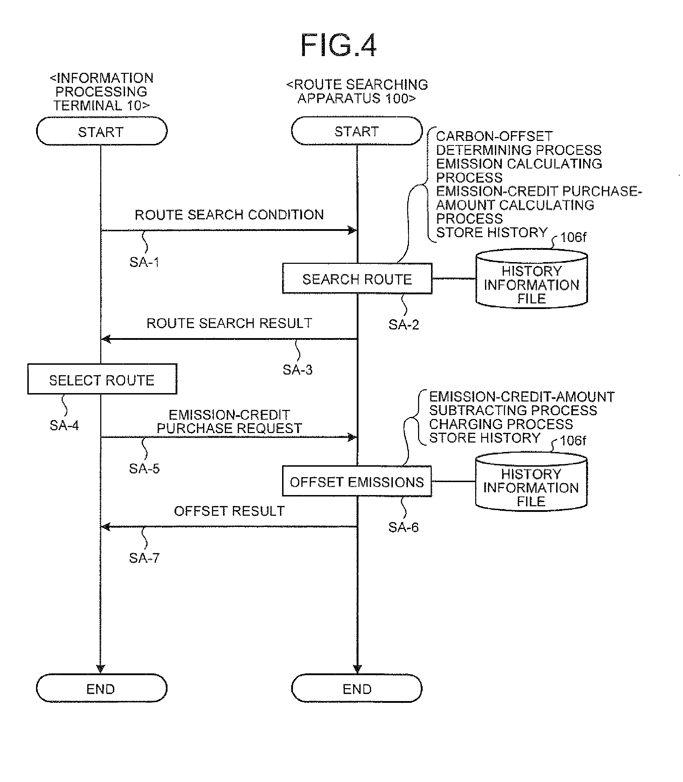

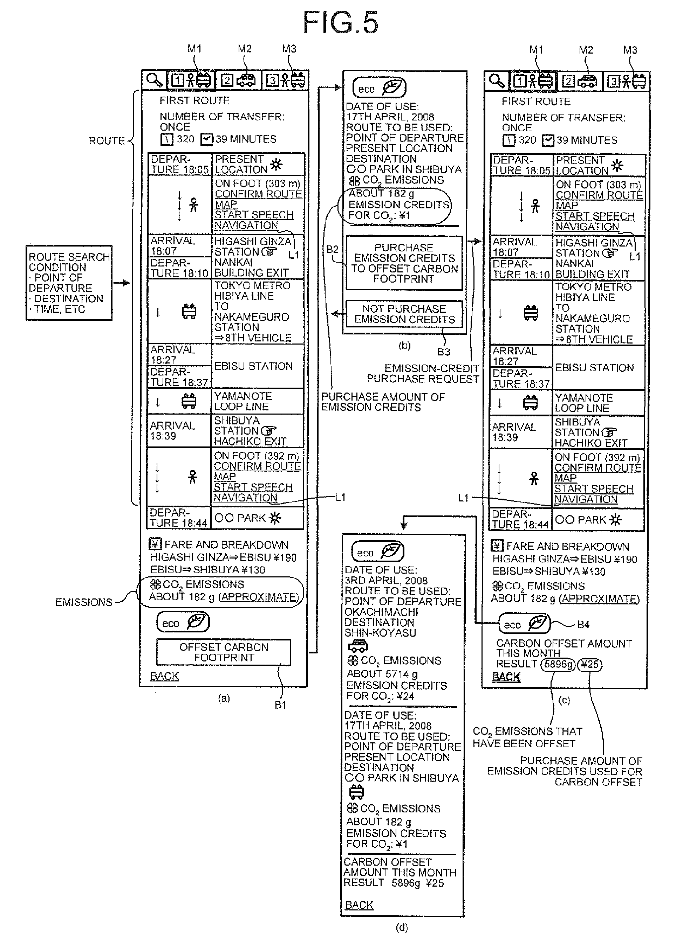

In an outline of the present invention, a configuration and basic processing of a route searching apparatus of the present invention are explained with reference to FIGS. 1 to 5, and then respective processes performed by the route searching apparatus of the present invention are explained in detail. FIG. 1 is a block diagram of an example of a logical configuration of a route searching apparatus 100 according to the present invention, and conceptually shows only parts of the configuration related to the present invention. FIG. 2 is a diagram of an example of an attribute data structure according to the present invention. FIG. 3 is a diagram of another example of the attribute data structure according to the present invention. FIG. 4 is a diagram of an example of basic processing of the route searching apparatus 100 according to the present invention. FIG. 5 is a diagram of an example of a display screen of an information processing terminal 10 that displays a route search result and an offset result.

### Configuration of route searching apparatus 100

The configuration of the route searching apparatus 100 is explained with reference to FIG. 1.

As shown in FIG. 1, the route searching apparatus 100 is communicable connected to information processing terminals 10-1 to 10-3 including an input unit and a display unit, which are held by users who wish to offset their carbon footprint, through a network 300 via a communication control interface unit 104, and includes a storage unit 106 and a control unit 102. Respective units of the route searching apparatus 100 are communicably connected to each other via an arbitrary communication path.

In FIG. 1, the information processing terminals 10-1 to 10-3 have functions for accessing the route searching apparatus 100 to perform route search or search for peripheral information. For example, the information processing terminals 10-1 to 10-3 are respectively an information processor such as a desktop or laptop personal computer generally available in the market, or a portable terminal device such as a mobile phone, a PHS, or a PDA. The information processing terminals 10-1 to 10-3 include a display unit (for example, a display or monitor constituted of a liquid crystal or organic EL) that displays a route search result or an offset result received from the route searching apparatus 100, and an input unit (for example, a key input unit, a touch panel, a keyboard, or a microphone) that inputs a route search condition to be transmitted to the route searching apparatus 100 or selects a purchase amount request. The information processing terminals 10-1 to 10-3 may include, for example, a position detecting unit (not shown) having a GPS function, and may transmit position information indicating a present location detected by the position detecting unit to the route searching apparatus 100 so that navigation guide may be performed on the real-time basis by the route searching apparatus 100.

In FIG. 1, the communication control interface unit 104 is an interface connected to a communication device (not shown) such as a router connected to a communication line, or a phone line or the like, and has a function of performing communication control between the route searching apparatus 100 and a network 300. That is, the communication control interface unit 104 has a function of communicating data with the information processing terminals 10-1 to 10-3 or an external device (not shown) such as other server via the communication line. The network 300 has a function of interconnecting the route searching apparatus 100 and the information processing terminals 10-1 to 10-3 or the external device such as other server, and for example, it may be the Internet, a telephone network (including portable terminal network and general telephone network), the Intranet or the like.

In FIG. 1, the storage unit 106 is storage means such as a fixed disk device or an external hard disk, and stores various databases and tables (such as a route-search-information file 106a to a history information file 106f). For example, the storage unit 106 stores various programs, tables, files, databases, web pages or the like to be used for various processes.

Among the respective components of the storage unit 106, the route-search-information file 106a is a route-search-information storage unit that stores the route search information including timetable data, road network data, and usage fee data of transportation facilities to be used when the control unit 102 creates at least one route satisfying the route search condition (for example, a point of departure, a destination, a departure time, an arrival time, and transportation facilities to be used) received from the information processing terminals 10-1 to 10-3.
The timetable data to be stored in the route-search-information file 106a is numerical information and the like indicating a timetable of respective transportation facilities such as a train, an airplane, a bus, a streetcar, an aerial tramway, a monorail, a cable car, and a ship.
The road network data to be stored in the route-search-information file 106a is latitude and longitude information, position information or the like on a map such as various roads to be used for creating a route at the time of moving on foot or by a bicycle, a car, a motorbike or the like. The usage fee data to be stored in the route-search-information file 106a is numerical information and the like indicating a usage fee required at the time of using respective transportation facilities such as a train, an airplane, a bus, a streetcar, an aerial tramway, a monorail, a cable car, a ship or the like, and a fee for fuels consumed at the time of traveling by a car, a motorbike or the like, and may be used when the control unit 102 calculates a transportation cost. The usage fee and fuel fee may include the carbon tax. The timetable data, road network data and usage fee data are stored in the route-search-information file 106a beforehand, and the control unit 102 of the route searching apparatus 100 may regularly download the latest data via the network to update the route search information stored in the route-search-information file 106a.

Further, an emission calculation-standard file 106b is an emission calculation-standard storage unit that stores a calculation standard of greenhouse gas emissions per certain distance for each of the transportation facilities (including specific transportation facilities) or each of operating distances of the transportation facilities to be used when the control unit 102 calculates the greenhouse gas emissions emitted at the time of using at least one of the generated routes for each route. The emission calculation standard to be stored in the emission calculation-standard file 106b is a standard numerical value of emissions of greenhouse gas such as carbon dioxide per person calculated by being multiplied by a travel distance for each of the transportation facilities (for example, a train, a car, or an airplane) and for each of specific transportation facilities (for example, in the case of a train, a bullet train, a limited express, a linear motor car or the like). These calculation standards are stored in the emission calculation-standard file 106b beforehand, and the control unit 102 of the route searching apparatus 100 may regularly download the latest data via the network to update the calculation standard stored in the emission calculation-standard file 106b.

As an example of the calculation standard for each of transportation facilities or each of operating distances of the transportation facilities, according to "Transport, Traffic and Environment, 2007" (issued by the Foundation for Promoting Personal Mobility and Ecological Transportation under supervision of Environment and Ocean Division, Policy Bureau, Ministry of Land, Infrastructure, Transport and Tourism), emissions of carbon dioxide of each of transportation facilities per person are, for example, 173 (g/km) in a case of a private car, 111 (g/km) in a case of an airplane, 51 (g/km) in a case of a bus, and 19 (g/km) in a case of a train. It is assumed that there are no carbon dioxide emissions in a case of walking. It is also assumed that even if there is a difference from the transportation facility actually used, when many users use various routes, the figure comprehensively approaches the one calculated by using the numerical value.

As an example of the calculation standard for each specific transportation facility or each operating distance of the specific transportation facility, in the case of a train, detailed classification may be performed according to route and vehicle type (such as a local train or a bullet train), and the calculation standard may be corrected and calculated by using an optimum numerical value according to the classification. Further, for example, in a depopulated route, CO₂ emissions per passenger may increase. Therefore, the calculation standard may be corrected and calculated by using an appropriate numerical value with respect to the depopulated route.

For example, according to the JR East Group Sustainability Report 2007 (48P) by East Japan Railway Company (company name), carbon dioxide emissions of East Japan Railway Company (company name) are 15 (g/km), which is improved by 21% than that in "Transport, Traffic and Environment, 2007", which is used as the calculation standard of greenhouse gas emissions for trains. When a linear motor car is realized in the future, CO₂ emissions are high due to high speed traveling, and it is predicted that the calculation standard of greenhouse gas emissions will be 40 (g/km) or higher. In the case of the linear motor car, it is possible to consider offsetting the carbon footprint by adding a carbon-offset amount to the fare beforehand.

For example, as future measures and policies, it may be considered that such a political determination may be made that the government charges additional fee on all fares of, for example, Metropolitan Subway for offsetting carbon dioxide emissions so that the carbon offset scheme is implemented. In this case, it may be considered to generate funding for purchasing emission credits for the carbon offset by efforts such as cost reduction.

In this manner, the calculation standard of greenhouse gas emissions per certain distance may be changed politically or technically, and it is desired to use the calculation standard corresponding to the future measures and policies and technical renovations at the time of calculating carbon dioxide emissions.

The storage unit 106 of the route searching apparatus 100 prepares attribute data capable of determining the calculation standard of greenhouse gas emissions for each of transportation facilities or each of operating distances of the transportation facilities in an attribute data file 106d described later. Details of the attribute data are explained later with the attribute data file 106d.

An emission-credit amount file 106c is an emission-credit amount storage unit that stores an amount of emission credits for greenhouse gases for each of users, which is used when the control unit 102 receives an emission-credit purchase request with respect to a purchase amount of emission credits corresponding to a route selected by the users via the input unit from the information processing terminals 10-1 to 10-3 and offsets the greenhouse gas emissions by subtracting the greenhouse gas emissions corresponding to the received purchase amount of emission credits from the amount of emission credits stored in the emission-credit amount file 106c. The amount of emission credits to be stored in the emission-credit amount file 106c is numerical information indicating the amount of emission credits already purchased or to be purchased (when emission credits are purchased after the greenhouse gas emissions of the users are summed up) by the users (including end users of information processing terminals 10-1 to 10-3, a navigation provider of the route searching apparatus 100 and the like). Because a unit price of emission credits is different according to the source thereof or timing, the emission-credit amount file 106c may store an identification code of the emission credit, total greenhouse gas emissions, a unit price of the emission credits or the like. In the present embodiment, the information of identification code, unit price and the like of the emission credits are used when the control unit 102 calculates a purchase amount of emission credits required for offsetting the calculated emissions.

The attribute data file 106d is an attribute data storage unit that stores attribute data indicating whether the carbon footprint has been offset in other systems for each of transportation facilities or each of operating distances of the transportation facilities, which is to be used when the control unit 102 determines whether at least one of the created routes has been carbon offset in other systems.

For example, as shown in FIG. 2, the attribute data stored in the attribute data file 106d may include 2-bit attribute part and a 1-byte data part for each of operating distances.

Specifically, in FIG. 2, the attribute data may include, for example, the 1-byte data part (using a reference value of the transportation facility or the like) for each of 2-bit attribute parts (11, 10, 01, and 00).
11: Do not add carbon dioxide emissions because the carbon footprint is offset in other systems
10: (Free)
01: Use attached data as the reference value (g/km)
00: Use the reference value of the transportation facility (g/km)

As an example, the attribute part (11) "Do not add carbon dioxide emissions because the carbon footprint is offset in other systems" is attribute data indicating that a user who wishes to offset his carbon footprint in a certain transportation facility or operating distance of the transportation facility has been offset his carbon footprint by other method (for example, the method including emission credits in the transportation cost, the method of imposing taxation as the carbon tax or the like as described above) other than the method of purchasing carbon dioxide emission credits corresponding to the route search result. The attribute part (10) "(free)" is free data for storing attribute data that may be considered in the future. The attribute part (01) "Use attached data as the reference value (g/km)" is attribute data indicating that greenhouse gas emissions are calculated, in a specific transportation facility or operating distance of the specific transportation facility, by using the reference value of attached data, that is, a calculation standard (15 (g/km) in the case of a train of East Japan Railway Company (company name)) stored for each of specific transportation facilities or each of operating distances of the specific transportation facilities. The attribute part (00) "Use the reference value of the transportation facility (g/km)" is attribute data indicating that greenhouse gas emissions are calculated, in a certain transportation facility or operating distance of the transportation facility, by using the reference value of the transportation facility, that is, the calculation standard (19 (g/km) in the case of a local train) stored for each of transportation facilities or each of operating distances of the transportation facilities.

When a user who wishes to offset his carbon footprint has already offset the carbon footprint in other systems, calculation may be performed, as shown in FIG. 3, by using the attribute part (01). This calculation is substantially identical to the attribute part (11).

In the present embodiment, the attribute data stored in the attribute data file 106d is used by the control unit 102 to calculate the greenhouse gas emissions, taking into consideration that the carbon footprint has been offset in other systems, based on the routes search result, while referring to the attribute data for each of operating distances of respective transportation facilities. That is, when the control unit 102 determines that the carbon footprint has been offset in other systems by referring to the attribute data, the attribute data is used for calculating the greenhouse gas emissions, by excluding a route of at least one route created, which has been carbon offset.

For example, when a route to be carbon offset is a vehicle route and a carbon tax is imposed on petrol or the like to offset the carbon footprint, the carbon-offset vehicle route is excluded as a carbon-offset route to calculate the greenhouse gas emissions, and thus the greenhouse gas emissions are not added.

For example, when the route to be carbon offset is an airline route, and fuel consumption varies due to strong influence of westerlies or trade winds according to a flight direction of the airplane, the attribute data may be stored in the attribute data file 106d for each of the directions by using, for example, a node and a link. For example, when the route to be carbon offset is the airline route, the state of offsetting the carbon footprint may be different according to the point of departure. Specifically, in a ticket departing from Japan, the carbon footprint has been offset by payment for a purchase amount of emission credits included in the ticket price, however, a purchase amount of emission credits is not included in a ticket departing from foreign countries, and thus the carbon footprint has not been offset. In this case, a method of notifying a user of the greenhouse gas emissions for a returning flight may be considered.

A charge information file 106e is a charge information storing unit that stores charge information relating to a charge status of a purchase amount of emission credits for each of users, which is used when the control unit 102 charges the users who wish to offset their carbon footprint for the calculated purchase amount of emission credits. In the present embodiment, as an example, the control unit 102 may transmit the charge information relating to the emission credits already purchased or to be purchased by users (for example, numerical information indicating an amount corresponding to the emission credits), which is stored in the charge information file 106e beforehand, for example, to mobile phone carriers (for example, communication service providers for mobile phones or manufacturers of mobile phones), to charge the user so that settlement is made.

The history information file 106f is a history information storage unit that stores history information in which users, route search results (routes, greenhouse gas emissions, purchase amount of emission credits or the like), and offset results (offset greenhouse gas emissions, purchase amount of emission credits corresponding to the greenhouse gas emissions or the like) are associated with each other, by storing the route search results, the offset results or the like to be transmitted to the information processing terminals 10-1 to 10-3 for each of the users by the control unit 102. As an example, the history information file 106f may store at least IDs of users of the information processing terminals 10-1 to 10-3 and offset greenhouse gas emissions in association with each other for each of emission credits acquired beforehand (including emission credits already purchased or to be purchased), and may store at least a route and the purchase amount of emission credits in association with each other for each of IDs.

In FIG. 1, the control unit 102 includes an internal memory that stores a control program such as an operating system (OS), a program specifying various processing procedures, and necessary data. The control unit 102 performs information processing for executing various pieces of processing by using these programs. The control unit 102 functionally and conceptually includes a route creating unit 102a, a carbon-offset determining unit 102b, an emission calculating unit 102c, an emission-credit purchase-amount calculating unit 102d, a route-search-result displaying unit 102e, an emission offsetting unit 102f, an offset-result displaying unit 102g, and a charging unit 102h.

The route creating unit 102a is a route creating unit that receives a route search condition input from a user via the input unit from the information processing terminals 10-1 to 10-3 to create at least one route that satisfy the received route search condition by using the route search information stored in the route-search-information file 106a.

The carbon-offset determining unit 102b is a carbon-offset determining unit that determines whether the carbon footprint has been offset in other system for at least one route created by the route creating unit 102a, for each of transportation facilities or each of operating distances of the transportation facilities based on the attribute data stored in the attribute data file 106d.

The emission calculating unit 102c is an emission calculating unit that calculates emissions emitted at the time of using at least one route created by the route creating unit 102a for each of the routes, by using the calculation standard stored in the emission calculation-standard file 106b. In the present embodiment, when the carbon-offset determining unit 102b determines that the carbon footprint has been offset, the emission calculating unit 102c excludes the carbon-offset route from the at least one route created by the route creating unit 102a and calculates greenhouse gas emissions emitted at the time of using the at least one route created by the route creating unit 102a for each of the routes by using the calculation standard stored in the emission calculation-standard file 106b. When the carbon-offset determining unit 102b determines that the carbon footprint has not been offset, because there is no carbon-offset route, the emission calculating unit 102c calculates greenhouse gas emissions emitted at the time of using the at least one route created by the route creating unit 102a for each of the routes by using the calculation standard stored in the emission calculation-standard file 106b for all the routes.

The emission-credit purchase-amount calculating unit 102d is an emission-credit purchase-amount calculating unit that calculates the purchase amount of emission credits required for offsetting the greenhouse gas emissions calculated by the emission calculating unit 102c based on an identification code or a unit price of the emission credits or the like stored in the emission-credit amount file 106c. For example, because a purchase amount of emission credits may be calculated for each emission credit certificate issued by an emission credit provider or the like, the emission-credit purchase-amount calculating unit 102d may inquire the emission-credit amount file 106c (or an external emission-credit management server communicably connected thereto via a network or the like) of the unit price of emission credits usable for offsetting the carbon footprint to estimate the purchase amount of emission credits.

Specifically, as an example, when the unit price of emission credits usable for offsetting the carbon footprint is "¥4200/ton", the emission-credit purchase-amount calculating unit 102d estimates that the emission credits required for offsetting greenhouse gas emissions of, for example, "182 g" is '"4200/1000000*182=0.7644 (¥). It is assumed that less than 1 yen is rounded to 1 yen for convenience' sake of processing. Thus, the emission-credit purchase-amount calculating unit 102d calculates the purchase amount of emission credits required for offsetting the greenhouse gas emissions of "182 g" as "¥1". When the train is used, because their carbon footprint is low, the carbon footprint can be offset by the purchase cost of 1 yen. Because the route-search-result displaying unit 102e described later displays the greenhouse gas emissions and the purchase amount of emission credits corresponding to the greenhouse gas emissions, users can easily ascertain the cost for realizing the carbon offset.

Subsequently, as another example, when travel between "Haneda to Nagasaki (one way)" is performed by using an airplane, the emission calculating unit 102c calculates the greenhouse gas emissions as "175779 g", and the emission-credit purchase-amount calculating unit 102d calculates the purchase amount of emission credits required for offsetting the greenhouse gas emissions as "¥739" based on the unit price described above. Thus, when an airplane is used, an enormous amount of carbon dioxide is consumed; however, in an individual level, the required amount is as low as practicable of the carbon offset scheme.

The route-search-result displaying unit 102e is a route-search-result displaying unit that transmits a route search result including at least one route created by the route creating unit 102a, greenhouse gas emissions calculated by the emission calculating unit 102c, and the purchase amount of emission credits calculated by the emission-credit purchase-amount calculating unit 102d to the information processing terminals 10-1 to 10-3 so that the route search result is displayed on the display unit. The route-search-result displaying unit 102e may store at least a part of the route search result in the history information file 106f for each of the users.

The emission offsetting unit 102f is an emission offsetting unit that receives the emission-credit purchase request with respect to the purchase amount of emission credits selected by each of the users via the input unit from the information processing terminals 10-1 to 10-3, based on the route search result displayed by the route-search-result displaying unit 102e, and offsets the greenhouse gas emissions by subtracting the greenhouse gas emissions corresponding to the received purchase amount of emission credits from the amount of emission credits stored in the emission-credit amount file 106c.

The offset-result displaying unit 102g is an offset-result displaying unit that transmits an offset result including the greenhouse gas emissions offset by the emission offsetting unit 102f and the purchase amount of emission credits corresponding to the greenhouse gas emissions to the information processing terminals 10-1 to 10-3 so that the offset result is displayed on the display unit. The offset-result displaying unit 102g may store at least a part of the offset result in the history information file 106f for each of the users.

The charging unit 102h charges the purchase amount of emission credits calculated by the emission-credit purchase-amount calculating unit 102d to the users. In the present embodiment, as an example, the charging unit 102h may transmit the charge information relating to the emission credits already purchased or to be purchased by the users (for example, numerical information indicating an amount corresponding to the emission credits), which is stored in the charge information file 106e beforehand, for example, to the mobile phone carriers (for example, communication service providers for mobile phones or manufacturers of mobile phones), to charge the user so that settlement is made.

The explanation of the configuration of the route searching apparatus 100 ends here.

### Basic processing of route searching apparatus 100

Basic processing of the present invention is explained below with reference to FIGS. 4 and 5.

In the present invention, the information processing terminal 10 has an ID capable of logging in the route searching apparatus 100 (for example, including an information processing terminal identification ID such as a body identification number of a mobile phone, a PHS, or a PDA, or a user identification ID of a navigation system), and logs in the route searching apparatus 100 to transmit a route search request together with a route search condition, when route search is required.

As shown in FIG. 4, the route creating unit 102a receives the route search condition input by a user who wishes to offset his carbon footprint via the input unit of the information processing terminal 10, from the information processing terminal 10 (Step SA-1).

The route search condition includes at least a point of departure and a destination, and may include a condition relating to date, time, display sequence (in the order of required time, fares, the number of transfers, CO₂ emissions or the like), walking speed (standard, slow, or quick or the like), and a route to be used (an airplane, a bullet train, a limited express train, a route bus, or other paid routes or the like).

The route creating unit 102a creates at least one route satisfying the route search condition received from the information processing terminal 10 by using the route search information stored in the route-search-information file 106a. The carbon-offset determining unit 102b determines whether at least one route created by the process performed by the route creating unit 102a have been carbon offset in other systems, for each of transportation facilities or each of operating distances of the transportation facilities, based on the attribute data stored in the attribute data file 106d. When it is determined that the route has been carbon offset by the process performed by the carbon-offset determining unit 102b, the emission calculating unit 102c excludes the carbon-offset route from the at least one route created by the process performed by the route creating unit 102a, and calculates the greenhouse gas emissions emitted at the time of using the at least one route created by the process performed by the route creating unit 102a for each of the routes by using the calculation standard stored in the emission calculation-standard file 106b. When it is determined that the route has not been carbon offset by the process performed by the carbon-offset determining unit 102b, the emission calculating unit 102c calculates the greenhouse gas emissions emitted at the time of using the at least one route created by the process performed by the route creating unit 102a for each of the routes, by using the calculation standard stored in the emission calculation-standard file 106b. The emission-credit purchase-amount calculating unit 102d calculates the purchase amount of emission credits required for offsetting the greenhouse gas emissions calculated by the process performed by the emission calculating unit 102c (Step SA-2). Details of respective processes performed at Step SA-2 (a carbon-offset determining process, an emission calculating process, and an emission-credit purchase-amount calculating process) are described later.

At Step SA-2, the route-search-result displaying unit 102e transmits a route search result including the at least one route created by the process performed by the route creating unit 102a, the greenhouse gas emissions calculated by the process performed by the emission calculating unit 102c, and the purchase amount of emission credits calculated by the process performed by the emission-credit purchase-amount calculating unit 102d to the information processing terminal 10, so that the display unit of the information processing terminal 10 displays the route search result (Step SA-3). The route-search-result displaying unit 102e may store at least a part of the route search result in the history information file 106f for each of the users.

An example of the route search result displayed on the display unit of the information processing terminal 10 by the process performed by the route-search-result displaying unit 102e at Step SA-3 is explained below with reference to FIGS. 5(a) and 5(b).

As shown in FIGS. 5(a) and 5(b), the route-search-result displaying unit 102e displays the route search result including a route satisfying the route search condition input by the user, greenhouse gas emissions emitted at the time of using the route, and a purchase amount of emission credits required for offsetting the greenhouse gas emissions.

As an example, "route" (for example, including information relating to the number of transfers, fares, the required time, the walking distance, transfer stations, the most convenient boarding vehicle, the most appropriate ticket gate) and "emissions" (CO₂ emissions (g)) of the route search result are displayed on a display screen shown in FIG. 5(a). Specifically, "first route" is displayed on the display screen in FIG. 5(a) as a route in the route search result, and the first route (the train route) includes "on foot → train → train → on foot" from the present location to the destination. In FIG. 5(a), 1) a train mark M1, 2) a vehicle mark M2, and 3) a train mark M3 are displayed at an upper end of the screen. These marks M1 to M3 indicate that the first and third routes are "train routes" and the second route is a "vehicle route". On a lower part of the display screen in FIG. 5(a), further, CO₂ emissions of "about 182 g" is displayed as the "emissions" in the route search result and an "offset carbon footprint (purchase carbon credits)" button B1 is also displayed. When the user clicks the button B1, a screen shifts to a page shown in FIG. 5(b) at right side.

Search date of the route or information of the route are displayed on a display screen in FIG. 5(b) and emissions of carbon dioxide and the purchase amount of emission credits corresponding thereto are displayed on a lower part of the screen. That is, information indicating that the purchase amount of CO₂ emission credits is "¥1" as the "purchase amount of emission credits" (CO₂ emission credits (¥)) in the route search result is displayed on the display screen in FIG. 5(b). When the user confirms the purchase amount of emission credits and selects and clicks a "purchase emission credits to offset carbon footprint" button B2 on the lower part of the screen, an "emission-credit purchase request" with respect to the "purchase amount of emission credits (¥1)" required for offsetting the "emissions" emitted at the time of using the "first route" is transmitted to the route searching apparatus 100. On the other hand, when the user selects and clicks a "not purchase emission credits" button B3 on the lower part of the screen, a screen returns to a page shown in FIG. 5(a).

Referring back to FIG. 4, the emission offsetting unit 102f receives the emission-credit purchase request with respect to the purchase amount of emission credits corresponding to the route selected by the user who wishes to offset his carbon footprint via the input unit (Step SA-4) from the information processing terminal 10, based on the route search result displayed on the display unit of the information processing terminal 10 (Step SA-5).

The emission offsetting unit 102f subtracts the CO₂ emissions corresponding to the received purchase amount of emission credits from the amount of emission credits stored in the emission-credit amount file 106c to offset the CO₂ emissions (Step SA-6). The charging unit 102h may charge the purchase amount of emission credits calculated by the process performed by the emission-credit purchase-amount calculating unit 102d to the user. Details of the respective processes performed at Step SA-6 (an emission-credit-amount subtracting process and a charging process) are described later.

An example of the charging process performed by the charging unit 102h at Step SA-6 is explained below with reference to FIGS. 5(a) and 5(b).

As an example, when not only the user clicks the "offsets carbon footprint" button B1 shown in FIG. 5(a) but also the control unit 102 of the route searching apparatus 100 actually performs navigation, the charging unit 102h may perform the charging process. Specifically, as shown in FIGS. 5(a) and 5(c), when the user clicks a "start speech navigation" link L1, the charging unit 102h may recognize the user of the information processing terminal 10 as a charging target, and perform the charging process. The timing may be on the departure side or destination side of navigation started by the "start of speech navigation". Charging may be performed when navigation by the route searching apparatus 100 reaches near the destination and a termination guide such as "You have reached your destination !" may be output by an output unit (not shown) such as a speaker.

Referring back to FIG. 4, the offset-result displaying unit 102g transmits an offset result including at least the CO₂ emissions offset by the process performed by the emission offsetting unit 102f and the purchase amount of emission credits corresponding to the CO₂ emissions to the information processing terminal 10 so that the offset result is displayed on the display unit of the information processing terminal 10 (Step SA-7). The offset-result displaying unit 102g may store at least a part of the offset result in the history information file 106f for each of the users.

An example of the offset result displayed on the display unit of the information processing terminal 10 by the process performed by the offset-result displaying unit 102g at Step SA-7 is explained below with reference to FIGS. 5(c) and 5(d).

As shown in FIGS. 5(c) and 5(d), the offset-result displaying unit 102g displays a route and emissions together with emissions that have been offset and purchase amount of emission credits used for offsetting the emissions.

As an example, "CO₂ emissions that have been offset" and "purchase amount of emission credits used for carbon offset" are displayed on the lower part of a display screen in FIG. 5(c), in addition to the route search result in FIG. 5(a). That is, when the button B2 is clicked on the display screen in FIG. 5(b), the offset-result displaying unit 102g hides the "offset carbon footprint" button B1 in FIG. 5(a) with respect to the "first route" according to the received emission-credit purchase request, and displays, for example, "carbon offset amount this month" of the user. Specifically, "5896 g" as this month's total of CO₂ emissions offset by the process performed by the emission offsetting unit 102f and "¥25" as this month's total of the purchase amount of emission credits corresponding to the offset CO₂ emissions are displayed in the "carbon offset amount this month" on the display screen in FIG. 5(c). The route searching apparatus 100 stores the history information in which users, route search results, and offset results are associated with each other in the history information file 106f. Specifically, the route searching apparatus 100 stores at least IDs of users' information processing terminals 10 in association with offset CO₂ emissions (offset amounts) for each of emission credits acquired beforehand (including already purchased or to be purchased). Therefore, for example, carbon offset amounts can be aggregated on a monthly basis, such as "carbon offset amount this month" shown in FIG. 5(c) to display the offset result.

When the user clicks a "logo mark (eco)" button B4 representing carbon offset on the display screen shown in FIG. 5(c), a display screen shown in FIG. 5(d) is displayed. As an example, details of results this month such as date of use, point of departure, destination, type of transportation facilities, CO₂ emissions, and amount of emission credits are displayed on the display screen in FIG. 5(d). Specifically, past history information (for example, vehicle route, CO₂ emissions of "about 5714 g", and emission credits of "¥24") for the date of use on 3rd April, 2008, and information (for example, train route, CO₂ emissions of "about 182 g", and emission credits of "¥1") on 17th April shown in FIG. 5(b) are displayed on the display screen in FIG. 5(d), and breakdown of this month's total of "5896 g" of offset CO₂ emissions and this month's total of "¥25" of the purchase amount of emission credits corresponding to the offset CO₂ emissions are displayed. The route searching apparatus 100 stores the history information in which users, route search results, and offset results are associated with each other in the history information file 106f. Specifically, the route searching apparatus 100 stores at least routes and purchase amount of emission credits in association with each other for each of the IDs. Therefore, for example, the offset result can be displayed together with the breakdown, as in details of "carbon offset amount this month" shown in FIG. 5(d).

The explanation of the basic processing of the route searching apparatus 100 ends here.

The explanation of the outline of the present invention ends here.

### Respective processes performed by route searching apparatus 100

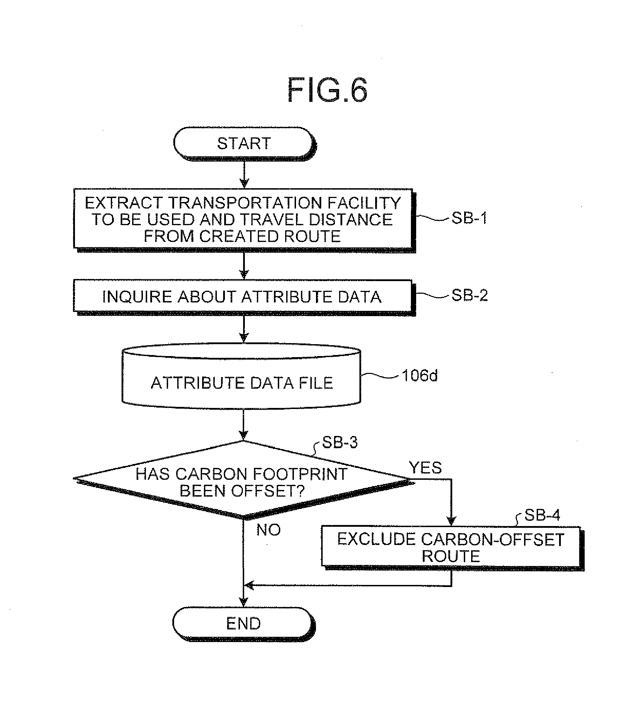

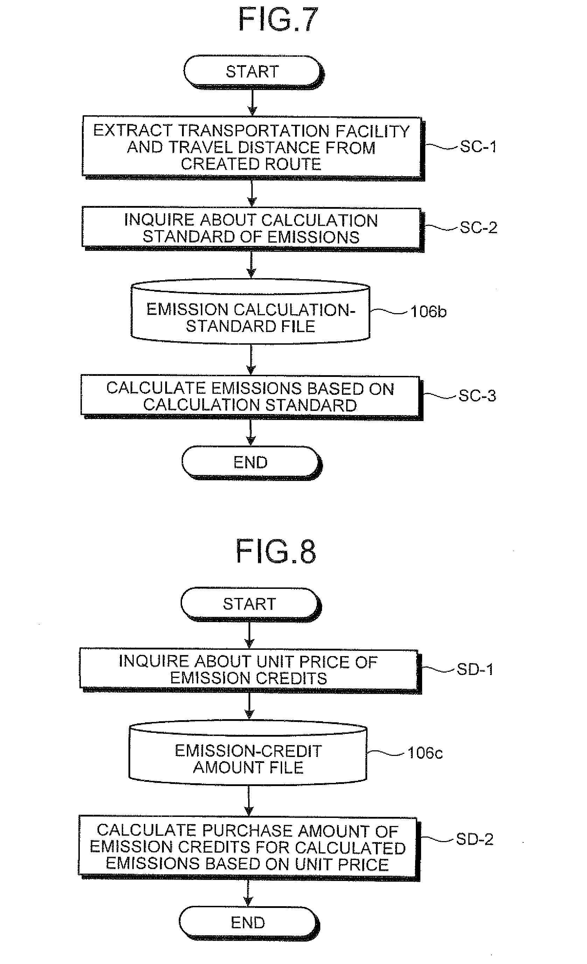

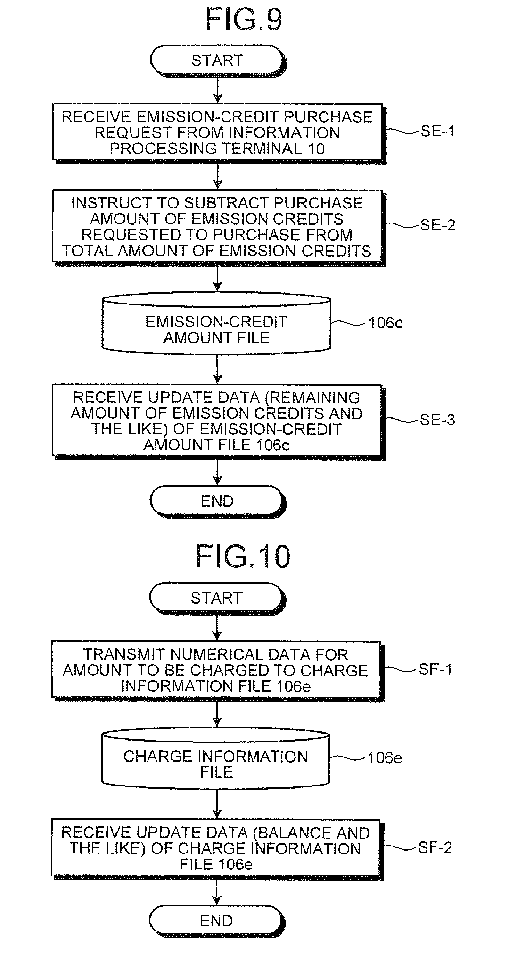

An example of respective processes (a carbon-offset determining process to a charging process) performed by the route searching apparatus 100 in the present embodiment is explained in detail below with reference to FIGS. 6 to 10. FIG. 6 is a flowchart of an example of the carbon-offset determining process. FIG. 7 is a flowchart of an example of the emission calculating process. FIG. 8 is a flowchart of an example of the emission-credit purchase-amount calculating process. FIG. 9 is a flowchart of an example of an emission-credit-amount subtracting process. FIG. 10 is a flowchart of an example of the charging process.

### Carbon-offset determining process

An example of the carbon-offset determining process performed at Step SA-2 in FIG. 4 is explained below with reference to FIG. 6.

As shown in FIG. 6, the carbon-offset determining unit 102b extracts, from at least one route created by the process performed by the route creating unit 102a, transportation facilities (for example, a private car, an airplane, a bus, or a train, and in the case of a train, a bullet train, a limited express, a linear motor car or the like) to be used at the time of using the route and a travel distance (km) at the time of using the route (Step SB-1).

The carbon-offset determining unit 102b inquires the attribute data file 106d about the attribute data indicating whether the carbon footprint has been offset in other systems (for example, 11: Do not add carbon dioxide emissions because the carbon footprint is offset in other systems, 00: Use the reference value of the transportation facility) for each of the extracted transportation facilities or each of the operating distances (travel distances) of the transportation facilities (Step SB-2).

The carbon-offset determining unit 102b verifies each of the transportation facilities or each of the operating distances of the transportation facilities extracted at Step SB-1 with the inquired attribute data to distinguish between routes that have been carbon offset and routes that have not been carbon offset, and determines the implementation state of the carbon offset scheme (Step SB-3). That is, the carbon-offset determining unit 102b determines whether the at least one route created by the process performed by the route creating unit 102a have been carbon offset in other systems for each of the transportation facilities or each of the operating distances of the transportation facilities based on the attribute data stored in the attribute data file 106d.

When it is determined that the route has been carbon offset by the process performed by the carbon-offset determining unit 102b (YES at Step SB-3), the emission calculating unit 102c excludes the carbon-offset route from the at least one route created by the process performed by the route creating unit 102a (Step SB-4). The carbon-offset determining process is finished and control proceeds to the emission calculating process described later.

On the other hand, when it is determined that the route has not been carbon offset by the process performed by the carbon-offset determining unit 102b (NO at Step SB-3), the carbon-offset determining process is finished and control proceeds to the emission calculating process described later.

### Emission calculating process

An example of the emission calculating process performed at Step SA-2 in FIG. 4 is explained below with reference to FIG. 7.

As shown in FIG. 7, the emission calculating unit 102c extracts, from the at least one route created by the process performed by the route creating unit 102a, a transportation facility to be used at the time of using the route and the travel distance (km) at the time of using the route (Step SC-1).

The emission calculating unit 102c inquires the emission calculation-standard file 106b about emission calculation standards different for each of the extracted transportation facilities or each of the operating distances of the transportation facilities (for example, 173 (g/km) in the case of a private car, 111 (g/km) in the case of an airplane, 51 (g/km) in the case of a bus, 19 (g/km) in the case of a train, and 15 (g/km) in the case of a train of East Japan Railway Company (company name)) (Step SC-2).

The emission calculating unit 102c applies the inquired calculation standard to the transportation facility (for example, train of East Japan Railway Company (company name) extracted at Step SC-1 and the travel distance (for example, about 9.6 km) to calculate CO₂ emissions (for example, about 144 grams) (Step SC-3).

In the present embodiment, when the carbon-offset determining unit 102b determines that the route has been carbon offset (YES at Step SB-3 in FIG. 6), the emission calculating unit 102c excludes the carbon-offset route from the at least one route created by the process performed by the route creating unit 102a to calculate CO₂ emissions emitted at the time of using the at least one route created by the process performed by the route creating unit 102a for each of the routes, by using the calculation standard stored in the emission calculation-standard file 106b. When the carbon-offset determining unit 102b determines that the route has not been carbon offset (NO at Step SB-3 in FIG. 6), because there is no route that has been carbon offset, the emission calculating unit 102c calculates CO₂ emissions emitted at the time of using the at least one route created by the process performed by the route creating unit 102a for each of the routes, by using the calculation standard stored in the emission calculation-standard file 106b for all the routes.

### Emission-credit purchase-amount calculating process

An example of the emission-credit purchase-amount calculating process performed at Step SA-2 in FIG. 4 is explained below with reference to FIG. 8.

As shown in FIG. 8, the emission-credit purchase-amount calculating unit 102d inquires the emission-credit amount file 106c about unit price of emission credits (for example, ¥4200/ton) (Step SD-1).

The emission-credit purchase-amount calculating unit 102d calculates a purchase amount of emission credits (for example, 1 yen) for CO₂ emissions (for example, about 182 grams) calculated by the process performed by the emission calculating unit 102c, based on the inquired unit price of emission credits (Step SD-2).

### Emission-credit-amount subtracting process

An example of the emission-credit-amount subtracting process performed at Step SA-6 in FIG. 4 is explained below with reference to FIG. 9.

As shown in FIG. 9, the emission offsetting unit 102f receives an emission-credit purchase request (for example, purchase request of emission credits for 1 yen) with respect to the purchase amount of emission credits transmitted from the information processing terminal 10 (Step SE-1).

The emission offsetting unit 102f instructs the emission-credit amount file 106c to subtract the purchase amount of emission credits (for example, 1 yen) requested to purchase from the total amount of emission credits stored in the emission-credit amount file 106c (for example, 1000 yen) for each of the users (for example, 1000 yen - 1 yen) (Step SE-2).

The emission offsetting unit 102f receives update data of the emission-credit amount file 106c indicating a remaining amount of emission credits after subtraction (for example, 1000 yen - 1 yen = 999 yen) (Step SE-3).

### Charging process

An example of the charging process performed at Step SA-6 in FIG. 4 is explained below with reference to FIG. 10.

As shown in FIG. 10, the charging unit 102h transmits numerical information of emission credits (for example, 1 yen) calculated by the process performed by the emission-credit purchase-amount calculating unit 102d, requested to purchase by the user, and subtracted from the emission-credit amount file 106c by the process performed by the emission offsetting unit 102f to the charge information file 106e (Step SF-1). That is, the charging unit 102h instructs to subtract the amount corresponding to the emission credits (for example, 1 yen) from the charge information file 106e that stores charge information corresponding to a virtual account for alternative charging consigned by the user beforehand, and transmits the charge information, for example, to the mobile phone carriers (for example, communication service providers for mobile phones or manufacturers of mobile phones), to charge the user on behalf of the route searching apparatus so that settlement is made.

The charging unit 102h may perform the charging process (settlement) every time CO₂ emissions are offset by the process performed by the emission offsetting unit 102f, or after the total of purchase amount of emission credits is calculated regularly (such as weekly or monthly). Alternatively, settlement may be performed after the amount to be charged has reached a predetermined amount, or may be performed according to a prepaid system, which includes a purchase procedure separately. In the case of a prepaid system, balance display may be such that available distance is displayed for each of transportation facilities.

The charging unit 102h receives update data of the charge information file 106e indicating the balance or the like (for example, ¥5000 - ¥1 = ¥4999) of deposit amount or the like of the charged (settled) user (Step SF-2).

The explanations of the respective processes of the route searching apparatus 100 end here.

### Other Embodiments

The embodiment of the present invention is explained above. However, the present invention may be implemented in various different embodiments other than the embodiment described above within a technical scope described in claims.

All the automatic processes explained in the present embodiment can be, entirely or partially, carried out manually. Similarly, all the manual processes explained in the present embodiment can be, entirely or partially, carried out automatically by a known method.

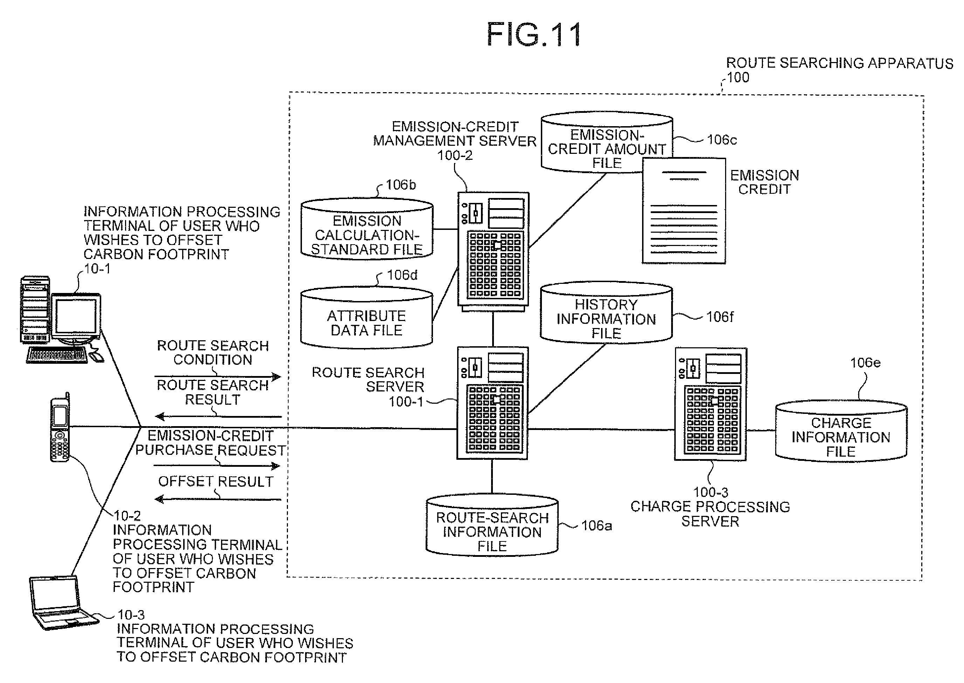

For example, in the present embodiment, the route searching apparatus 100 is configured as a single server. However, it is also possible to configure the route searching apparatus 100 with a plurality of servers functioning in tandem. FIG. 11 is a diagram of an example of the route searching apparatus 100 according to other embodiment of the present invention configured by a plurality of server devices according to other embodiment of the present invention. Specifically, as shown in FIG. 11, the route search server 100-1 includes the route-search-information file 106a and the history information file 106f, and has functions corresponding to the route creating unit 102a, the route-search-result displaying unit 102e, and the offset-result displaying unit 102g of the control unit 102 described above. The emission-credit management server 100-2 includes the emission calculation-standard file 106b, the emission-credit amount file 106c, and the attribute data file 106d, and has functions corresponding to the carbon-offset determining unit 102b, the emission calculating unit 102c, the emission-credit purchase-amount calculating unit 102d, and the emission offsetting unit 102f of the control unit 102 described above. The charge processing server 100-3 includes the charge information file 106e, and has a function corresponding to the charging unit 102h of the control unit 102 described above. Herein, the route search server 100-1, the emission-credit management server 100-2, and the charge processing server 100-3 are communicably connected via a network and perform data association. Hence, the plurality of servers 100-1 to 100-3 can be made to operate as the route searching apparatus 100 according to the present invention. In addition, although the route searching apparatus 100 according to the present invention is not limited to the client-server type, the embodiment (the client-server type) which can change the various parameters as server side is desirable, in view of performing the determination whether the carbon offset has been done with reference to the attribute data file 106d, or updating the calculation standard of greenhouse gas emissions per certain distance stored in the emission calculation-standard file 106b.

The process procedures, the control procedures, specific names, information including registration data for each process and various parameters such as search conditions, display example, and database construction, mentioned in the description and drawings can be changed as required unless otherwise specified.

The constituent elements of the route searching apparatus 100 are merely conceptual and may not necessarily physically resemble the structures shown in the drawings.

For example, the process functions performed by each device of the route searching apparatus 100, especially the each process function performed by the control unit 102, can be entirely or partially realized by CPU and a computer program executed by the CPU or by a hardware using wired logic. The computer program, recorded on a recording medium to be described later, can be mechanically read by the route searching apparatus 100 as the situation demands. In other words, the storage unit 106 such as read-only memory (ROM) or hard disk drive (HDD) stores the computer program that can work in coordination with an operating system (OS) to issue commands to the CPU and cause the CPU to perform various processes. The computer program is first loaded to the random access memory (RAM), and forms the control unit 102 in collaboration with the CPU.

Alternatively, the computer program can be stored in any application program server connected to the route searching apparatus 100 via the network 300, and can be fully or partially downloaded as the situation demands.

The computer program may be stored in a computer-readable recording medium, or may be structured as a program product. Here, the "recording medium" includes any "portable physical medium" such as a flexible disk, an optical disk, a ROM, an EPROM (Erasable Programmable Read Only Memory), an EEPROM (Electronically Erasable and Programmable Read Only Memory), a CD-ROM (Compact Disk Read Only Memory), an MO (Magneto-Optical disk), and a DVD (Digital Versatile Disk), or can be a "communication medium" such as a communication line or a carrier wave that holds the programs for a short period of time at the time of transmission via a network such as a LAN, a WAN, or the Internet.

Computer program refers to a data processing method written in any computer language and written method, and can have software codes and binary codes in any format. The computer program can be a dispersed form in the form of a plurality of modules or libraries, or can perform various functions in collaboration with a different program such as the OS. Any known configuration in the each device according to the embodiment can be used for reading the recording medium. Similarly, any known process procedure for reading or installing the computer program can be used.

Various databases (the route-search-information file 106a to the history-information file 106f) stored in the storage unit 106 is a storage means such as a memory device such as a RAM or a ROM, a fixed disk device such as a HDD, a flexible disk, and an optical disk, and stores therein various programs, tables, databases, and web page files used for providing various processing or web sites.

The route searching apparatus 100 may be structured as an information processing apparatus such as known personal computers or workstations, or may be structured by connecting any peripheral devices to the information processing apparatus. Furthermore, the route searching apparatus 100 may be realized by mounting software (including programs, data, or the like) for causing the information processing apparatus to implement the method according of the invention.

The distribution and integration of the device are not limited to those illustrated in the figures. The device as a whole or in parts can be functionally or physically distributed or integrated in an arbitrary unit according to various attachments or how the device is to be used. That is, any embodiments described above can be combined when implemented, or the embodiments can selectively be implemented.

### INDUSTRIAL APPLICABILITY

As described above in detail, the present invention provides the carbon offset scheme which is not overlapped with other measures and policies when the carbon offset is performed. Therefore, the present invention is readily-accepted by the society. According to the present invention, the route searching apparatus and the route searching method, which can allow the users who use transportation facilities on an individual level to participate in the carbon offset scheme without performing complicated processing, are provided. Therefore, the navigation system according to the present invention can calculate the emissions of greenhouse gases such as carbon dioxide, even if multiple transportation facilities are used when human moving, and thus, the users can participate in the carbon offset scheme on an individual level. Besides, by enabling a large number of carbon offsetting participants to purchase emission credits, an abundant flow of funds becomes available for the use of natural energy or the tree plantation programs thereby rejuvenating the related industries and contributing to the prevention of global warming. Therefore, the present invention is highly useful in information devices or in the field of information processing that supports carbon offsetting or route searching, and is highly useful in various fields such as natural energy development or the field of tree plantation.

Besides, since May 2007, the electrical power for all servers used in providing the navigation service has been switched by the present applicant(s) to the electrical power generated with natural energy sources by purchasing a green electricity certificate. Hence, the implementation of the present invention enables addressing the issue of environment conservation in a comprehensive manner.

## Claims

1. A route searching apparatus comprising:
a control unit and a storage unit and connected communicably via a network to an information processing terminal including: an input unit and a display unit, wherein
the information processing terminal is held by a user who wishes to offset own carbon footprint, and
the storage unit includes:
a route-search-information storage unit that stores route search information including timetable data, road network data, and usage fee data of transportation facilities;
an emission calculation-standard storage unit that stores a calculation standard of emissions of greenhouse gases per certain distance for each of the transportation facilities or each of operating distances of the transportation facilities;
an emission-credit amount storage unit that stores an amount of emission credits of the greenhouse gases for each of the users; and
an attribute data storage unit that stores attribute data, for each of the transportation facilities or each of the operating distances of the transportation facilities, indicating whether own carbon footprint has been offset in other systems, and
the control unit includes:
a route creating unit that receives route search condition input by the user via the input unit from the information processing terminal, and creates at least one route satisfying the received route search condition by using the route search information stored in the route-search-information storage unit;
a carbon-offset determining unit that determines whether own carbon footprint has been offset in the other systems for at least one route created by the route creating unit based on the attribute data stored in the attribute data storage unit, for each of the transportation facilities or each of the operating distances of the transportation facilities; and
an emission calculating unit that excludes the carbon-offset route from at least one route created by the route creating unit, when the carbon-offset determining unit determines that own carbon footprint has been offset, and calculates the emissions emitted at a time of using the at least one route created by the route creating unit for each corresponding route by using the calculation standard stored in the emission calculation standard storage unit.

2. The route searching apparatus according to claim 1, wherein the attribute data is determined according to presence of taxation on any one of used fuel and greenhouse gases or both.

3. The route searching apparatus according to claim 1, wherein
the emission calculating unit calculates the emissions emitted at a time of using the at least one route created by the route creating unit for each corresponding route by using the calculation standard stored in the emission calculation-standard storage unit, when the carbon-offset determining unit determines that own carbon footprint has not been offset, and
the control unit further includes:
an emission-credit purchase-amount calculating unit that calculates a purchase amount of emission credits required for offsetting the emissions calculated by the emission calculating unit;
a route-search-result displaying unit that transmits a route search result including at least one route created by the route creating unit, the emissions calculated by the emission calculating unit, and the purchase amount of emission credits calculated by the emission-credit purchase-amount calculating unit to the information processing terminal so that the route search result is displayed on the display unit;
an emission offsetting unit that receives an emission-credit purchase request with respect to the purchase amount of emission credits corresponding to the route selected by the user via the input unit from the information processing terminal, based on the route search result displayed by the route-search-result displaying unit, and offsets the emissions by subtracting the emissions corresponding to the received purchase amount of emission credits from the amount of emission credits stored in the emission-credit amount storage unit; and
an offset-result displaying unit that transmits an offset result including the emissions offset by the emission offsetting unit and the purchase amount of emission credits corresponding to the emissions to the information processing terminal so that the offset result is displayed on the display unit.

4. The route searching apparatus according to claim 3, wherein the control unit further includes:
a charging unit that charges the purchase amount of emission credits calculated by the emission-credit purchase-amount calculating unit to the user.

5. The route searching apparatus according to claim 3, wherein
the storage unit further includes:
a history information storage unit that stores history information in which at least a part of the route search result and a part of the offset result are associated with each other for each of the users,
the route-search-result displaying unit stores at least a part of the route search result in the history information storage unit for each of the users, and
the offset-result displaying unit stores at least a part of the offset result in the history information storage unit for each of the users.

6. A route searching method executed by a route searching apparatus including:
a control unit and a storage unit and connected communicably via a network to an information processing terminal including: an input unit and a display unit, wherein
the information processing terminal is held by a user who wishes to offset own carbon footprint, and
the storage unit includes:
a route-search-information storage unit that stores route search information including timetable data, road network data, and usage fee data of transportation facilities;
an emission calculation-standard storage unit that stores a calculation standard of emissions of greenhouse gases per certain distance for each of the transportation facilities or each of operating distances of the transportation facilities;
an emission-credit amount storage unit that stores an amount of emission credits of the greenhouse gases for each of the users; and
an attribute data storage unit that stores attribute data, for each of the transportation facilities or each of the operating distances of the transportation facilities, indicating whether own carbon footprint has been offset in other systems, and
the method comprising:
a route creating step of receiving route search condition input by the user via the input unit from the information processing terminal, and creating at least one route satisfying the received route search condition by using the route search information stored in the route-search-information storage unit;
a carbon-offset determining step of determining whether own carbon footprint has been offset in the other systems for at least one route created at the route creating step based on the attribute data stored in the attribute data storage unit, for each of the transportation facilities or each of the operating distances of the transportation facilities; and
an emission calculating step of excluding the carbon-offset route from at least one route created at the route creating step, when it is determined that own carbon footprint has been offset at the carbon-offset determining step, and calculating the emissions emitted at a time of using the at least one route created at the route creating step for each corresponding route by using the calculation standard stored in the emission calculation standard storage unit, wherein
the steps are executed by the control unit.

7. The route searching method according to claim 6, wherein the attribute data is determined according to presence of taxation on any one of used fuel and greenhouse gases or both.

8. The route searching method according to claim 6, wherein
at the emission calculating step, the emissions emitted at a time of using the at least one route created at the route creating step are calculated for each corresponding route by using the calculation standard stored in the emission calculation-standard storage unit, when it is determined that own carbon footprint has not been offset at the carbon-offset determining step, and
the method further comprising:
an emission-credit purchase-amount calculating step of calculating a purchase amount of emission credits required for offsetting the emissions calculated at the emission calculating step;
a route-search-result displaying step of transmitting a route search result including at least one route created at the route creating step, the emissions calculated at the emission calculating step, and the purchase amount of emission credits calculated at the emission-credit purchase-amount calculating step to the information processing terminal so that the route search result is displayed on the display unit;
an emission offsetting step of receiving an emission-credit purchase request with respect to the purchase amount of emission credits corresponding to the route selected by the user via the input unit from the information processing terminal, based on the route search result displayed at the route-search-result displaying step, and offsetting the emissions by subtracting the emissions corresponding to the received purchase amount of emission credits from the amount of emission credits stored in the emission-credit amount storage unit; and
an offset-result displaying step of transmitting an offset result including the emissions offset at the emission offsetting step and the purchase amount of emission credits corresponding to the emissions to the information processing terminal so that the offset result is displayed on the display unit.

9. The route searching method according to claim 8, wherein the method further comprising:
a charging step of charging the purchase amount of emission credits calculated at the emission-credit purchase-amount calculating step to the user.

10. The route searching method according to claim 8, wherein
the storage unit further includes:
a history information storage unit that stores history information in which at least a part of the route search result and a part of the offset result are associated with each other for each of the users,
at the route-search-result displaying step, at least a part of the route search result is stored in the history information storage unit for each of the users, and
at the offset-result displaying step, at least a part of the offset result is stored in the history information storage unit for each of the users.
